Europäisches Patentamt

European Patent Office

Office européen des brevets

(11) Numéro de publication: **0 306 579 B1**

(12) **FASCICULE DE BREVET EUROPEEN**

(45) Date de publication de fascicule du brevet:
**02.01.92**

(21) Numéro de dépôt: **87402000.1**

(22) Date de dépôt: **08.09.87**

(51) Int. Cl.⁵: **A01J 7/00, A01K 1/12**

---

(54) **Installation de traite automatique.**

---

(43) Date de publication de la demande:
**15.03.89 Bulletin 89/11**

(45) Mention de la délivrance du brevet:
**02.01.92 Bulletin 92/01**

(84) Etats contractants désignés:
**BE DE FR GB IT NL SE**

(56) Documents cités:
EP-A- 0 091 892          EP-A- 0 209 202
EP-A- 0 229 682          EP-A- 0 232 568
WO-A-85/02973          FR-A- 2 408 300
FR-A- 2 595 197          US-A- 4 010 714

(73) Titulaire: **CENTRE NATIONAL DU MACHINI-
SME AGRICOLE, DU GENIE RURAL, DES
EAUX ET DES FORETS (CEMAGREF)
Parc de Tourvoie
F-92160 Antony(FR)**

(72) Inventeur: **Montalescot, Jean-Bernard
1, rue Saint Laurent
F-91360 Villemoisson Sur Orge(FR)**
Inventeur: **Camus, Guy
2, Allée des Rosiers
F-94260 Fresnes(FR)**
Inventeur: **Lucas, Jean
83, boulevard St Michel
F-75005 Paris(FR)**

(74) Mandataire: **Joly, Jean-Jacques et al
CABINET BEAU DE LOMENIE 55, rue d'Amsterdam
F-75008 Paris(FR)**

## Description

La présente invention concerne une installation de traite automatique.

Depuis de nombreuses années, les progrès réalisés dans le domaine de la mécanisation et de l'automatisation ont permis aux éleveurs spécialisés dans la production laitière d'améliorer leurs conditions de travail et les rendements des animaux.

En plus des dispositifs de traite mécanique sont utilisés depuis longtemps, il existe en effet notamment des dispositifs d'identification automatique des animaux, des compteurs à lait qui permettent de mesurer la production de chaque animal et qui peuvent commander en fin de traite la dépose automatique des gobelets trayeurs de la machine de traite, des dispositifs de prélèvement automatique d'échantillons de lait associés aux compteurs à lait, et des dispositifs de distribution automatique d'aliments concentrés pour distribuer aux animaux les rations d'équilibre et de production.

Mais il subsiste au moins une opération réalisée manuellement ; il s'agit de la mise en place de gobelets trayeurs des machines de traite sur les trayons des animaux. Un dispositif réalisant automatiquement cette mise en place permettrait donc de supprimer la nécessité très contraignante de la présence d'une personne dans la salle de traite deux fois par jour, chaque jour de l'année.

De plus, il a été observé que la production des animaux augmente lorsqu'ils sont traits à chaque fois qu'ils se présentent à un poste de distribution de nourriture. Une automatisation complète de la traite permettrait d'effectuer quatre à cinq traites de chaque animal par jour, ce qui n'est bien sûr pas pratiquement et économiquement envisageable lorsqu'une partie des opérations doit être effectuée manuellement.

Des dispositifs destinés à permettre une mise en place automatique des gobelets trayeurs ont été proposés. On pourra en particulier se référer aux brevets ou demandes de brevets US 4 010 714, GB 2 007 486, EP 0 091 892, WO 85/02973, EP 0 188 303 FR 2 408 300, EP 0 209 202 et EP 0 229 682.

Ces dispositifs connus sont généralement associés à des stalles dans lesquelles les animaux sont maintenus enfermés pendant la durée de la traite et reçoivent des aliments distribués automatiquement.

Dans les dispositifs des documents US 4 010 714 et WO 85/02973, les positions des gobelets trayeurs sont ajustées en fonction d'informations préenregistrées relatives aux coordonnées des trayons des animaux. Toutefois, un positionnement correct des trayons ne peut être garanti à chaque fois car l'immobilisation de l'animal dans la stalle, même en utilisant des moyens de contention tels que des coussins gonflables (US 4 010 714), ne suffit pas à assurer la reproduction exacte des coordonnées des trayons d'une traite à l'autre et ce, non seulement pour des animaux différents, mais aussi pour un même animal en raison des variations de morphologie en cours de lactation, d'un jour à l'autre et entre deux traites.

Cet inconvénient peut être évité en effectuant une mesure de la position des trayons de chaque animal parvenu dans la stalle, comme proposé dans les documents EP 0 091 892, EP 0 188 303, EP 0 209 202 et EP 0 229 682. A cet effet, comme décrit dans le document EP 0 229 682, un capteur de position utilisant un système émetteur-récepteur d'ultrasons, est monté sur un support disposé à l'extrémité d'un bras mobile qui porte en outre quatre bras articulés qui supportent les gobelets trayeurs. Une telle disposition présente divers inconvénients dûs à l'encombrement du support et du risque d'endommagement du capteur par l'animal. Le document EP 0 209 202 décrit un système analogue, le capteur à ultrasons pouvant toutefois être porté par un support indépendant.

Le même inconvénient dû à l'encombrement se trouve dans d'autres dispositifs connus utilisant également un support commun pour les gobelets trayeurs, comme par exemple dans des dispositifs décrits dans les documents précités US 4 010 714 et WO 85/02972. L'encombrement tient non seulement au fait que le support mobile porte les quatre gobelets trayeurs, mais aussi en raison de la nécessité de prévoir, sur le support, les moyens nécessaires pour déplacer individuellement chaque gobelet trayeur par rapport au support dans au moins deux directions. En raison de cet encombrement, il est prévu dans des dispositifs connus précités des moyens pour obliger l'animal à se tenir dans une position dans laquelle la venue du support à proximité du pis n'est pas gênée, ces moyens consistant en une surélévation de la partie médiane du plancher de la stalle. Il en résulte pour l'animal une contrainte qui peut être difficilement acceptée.

D'autres dispositifs ont été proposés utilisant par contre un bras munipulateur unique pour mettre en place les gobelets trayeurs sur les trayons successivement et un par un, comme décrit dans les documents GB 2 007 486, FR 2 408 300 et EP 0 091 892. Le document FR 2 408 300 concerne plus particulièrement le moyen de faire pénétrer le trayon dans un manchon dont est muni le gobelet trayeur ; il décrit également un moyen pour interrompre le mouvement vertical du gobelet, en fin de pose, par détection de la dépression dans le conduite de succion. Dans ces dispositifs, la commande du bras manipulateur pose des problèmes difficiles à résoudre pour accéder, d'un même lieu où sont rangés les gobelets trayeurs, aux différents trayons de l'animal sans interférer avec les gobelets trayeurs déjà mis en place et avec les tuyaux auxquels ceux-ci sont reliés. De plus, des pertes de temps considérables susceptibles de contrarier la sécrétion hormonale, qui a une durée limitée, peuvent intervenir dans la procédure de remise en place de gobelets trayeurs accidentellement décrochés lors d'un coup de pied, par exemple ; en effet, pour reposer un gobelet trayeur décroché, il peut être nécessaire de déposer d'abord l'ensemble des gobelets restant en place, d'où une interruption de la traite.

La réalisation de dispositifs permettant à la fois une connaissance précise des coordonnées des trayons des animaux et une mise en place aisée des gobelets trayeurs sur les trayons sans gêne excessive pour l'animal est non seulement techniquement délicate, mais doit aussi satisfaire à la nécessité d'aboutir à un compromis acceptable entre, d'une part, la fiabilité et la robustesse de ces dispositifs et, d'autre part, leur coût. A cet égard, il a bien été proposé dans le document EP 0 091 892 de desservir plusieurs stalles au moyen d'un seul robot, mais la difficulté d'accès aux trayons peut nécessiter la venue du robot à une distance suffisamment faible de l'animal pour que celui-ci risque d'endommager le robot d'un coup de pied. Aussi, la présente invention a-t-elle pour but de fournir une installation de traite munie de moyens permettant une mise en place automatique de gobelets trayeurs sur les trayons d'un animal de façon fiable et à un coût raisonable, sans nécessiter de moyens de contention qui pourraient être difficilement acceptés par l'animal et sans demander des dispositifs manipulateurs complexes.

Ce but est atteint grâce à une installation comprenant :
- un dispositif de traite mécanique avec des gobelets trayeurs destinés à être mis en place sur les trayons d'animaux à traire,
- un dispositif de mesure des coordonées des trayons d'un animal à traire comportant un capteur global muni de moyens de balayage permettant de former une image des trayons de l'animal, et des moyens de calcul des coordonnées instantanées des trayons à partir des informations fournies par le capteur, et
- des moyens de mise en place automatique des gobelets trayeurs sur les trayons d'un animal, commandés en fonction des coordonnées calculées, et comportant quatre bras manipulateurs articulés indépendants, chacun portant un gobelet respectif à son extrémité et étant commandé indépendamment des autres pour déplacer le gobelet trayeur qu'il porte dans toute direction de l'espace, afin d'amener le gobelet trayeur sur un trayon respectif de l'animal sans interférer avec le mouvement des autres bras manipulateurs, installation caractérisée en ce qu'elle comprend en outre une stalle accessible par un animal, et en ce que le capteur global est disposé en un emplacement fixe d'un côté de la stalle et comprend : une source laser; lesdits moyens de balayage étant agencés de manière à ce que le faisceau lumineux issu de la source balaie une zone de la stalle où se trouvent les trayons d'un animal à traire ayant pénétré dans la stalle ; et une caméra pour former une image des trayons de cet animal, afin de déterminer les coordonnées des trayons par analyse de l'image formée sur la caméra.

En assignant un trayon particulier à chaque bras, il est possible de disposer les bras pour pouvoir amener les gobelets trayeurs sur les trayons simultanément, ou quasi-simultanément, et indépendamment, sans interférence entre les trajectoires des bras. De plus, le montage à demeure d'un gobelet sur chaque bras autorise une simplification de la structure et de la commande des bras puisqu'en particulier il n'est pas nécessaire de prévoir de moyens de préhension des gobelets par les bras. De plus encore, la remise en place d'un gobelet accidentellement décroché peut être effectuée rapidement et sans interrompre la traite, le gobelet restant à l'extrémité du bras associé et la trajectoire de celui-ci n'interférant pas avec celles des autres bras.

Par ailleurs, le capteur global fixe situé d'un côté de la stalle peut être placé à l'extérieur du couloir ou circule l'animal, ce qui permet de minimiser les risques d'endommagement ou de souillure. La caméra est par exemple une caméra à éléments CCD (dispositif à couplage de charge). La source lumineuse et la caméra sont situées en des emplacements différents connus, ce qui permet, connaissant également l'angle d'incidence du faisceau émis, de calculer les coordonnées des trayons.

Selon une particularité de l'installation conforme à l'invention, des moyens de détection particuliers sont associés à chaque gobelet trayeur et sont destinés à fournir une information de position représentative de la position relative entre un gobelet trayeur et un trayon d'un animal ayant pénétré dans la stalle, lorsque le gobelet trayeur a été amené à proximité du trayon, pour commander le bras manipulateur correspondant afin d'effectuer le positionnement final du gobelet trayeur sur le trayon.

Selon une autre particularité de l'installation conforme à l'invention chaque bras manipulateur est muni de moyens pour détecter des mouvements relatifs entre le bras et le gobelet trayeur qu'il porte, afin d'ajuster, le cas échéant, la position du bras pendant la traite d'un animal, pour compenser un déplacement relatif entre le bras et le gobelet trayeur porté par le bras, provoqué par un mouvement de l'animal.

Avantageusement, chaque bras manipulateur comprend, à son extrémité, une tige portant le gobelet trayeur correspondant et reliée au reste du bras par un dispositif déformable élastiquement pour pouvoir supporter sans dommage des coups portés par les animaux.

Selon une autre particularité de l'installation conforme à l'invention, les moyens de commande du positionnement approché des gobelets trayeurs comportent une mémoire dans laquelle sont enregistrées des informations représentant les coordonnées des trayons de chaque animal à traire et des moyens d'identification d'un animal pénétrant dans la stalle. La lecture des informations lues dans la mémoire sous la commande des moyens d'identification permet de connaître l'emplacement approximatif des trayons et, notamment, de valider les coordonnées calculées. La connaissance de l'emplacement approximatif des trayons permet également de limiter l'analyse de l'image formée sur la caméra à la zone ou doivent normalement se trouver les trayons et, par conséquent, de permettre un calcul plus rapide des coordonnées. Avantageusement, pour chaque animal, les coordonnées enregistrées sont remises à jour d'après la positionnement final des gobelets trayeurs.

Avantageusement encore, un dispositif de réglage de la position de la barrière avant de la stalle est prévu qui agit en réponse aux moyens d'identification d'un animal accédant à la stalle afin de régler la position de la barrière avant pour que les trayons des différents animaux à traire se situent toujours sensiblement dans une même zone. On limite de la sorte la zone d'intervention de chaque bras.

Différentes dispositions des bras peuvent être envisagées.

Avantageusement, au moins deux bras manipulateurs inférieurs sont prévus qui sont mobiles entre des positions d'origine situées sous le plancher de la stalle et des positions de travail dans lesquelles ils amènent les gobelets trayeurs sur deux trayons de l'animal, de préférence les trayons arrière.

Les deux autres bras manipulateurs peuvent être des bras latéraux mobiles entre des positions d'origine situées chacune d'un côté respectif de la stalle et des positions de travail dans lesquelles ils amènent les gobelets trayeurs sur les deux autres trayons de l'animal.

En variante, les deux autres bras manipulateurs peuvent être également des bras inférieurs qui, comme les deux premiers bras, ont des positions d'origine situées sous le plancher de la stalle.

Selon encore une autre particularité de l'installation conforme à l'invention, chaque bras manipulateur est, après chaque traite, ramené dans une position d'origine dans laquelle il amène le gobelet trayeur qu'il porte en regard d'un dispositif d'injection d'un liquide de nettoyage. Ainsi, le nettoyage automatique du circuit de lait de la machine de traite peut être effectué après chaque traite, ou après une succession de traites.

D'autres particularités et avantages de l'installation conforme à l'invention ressortiront à la lecture de la description faite ci-après, à titre indicatif mais non limitatif, en référence aux dessins annexés sur lesquels :

- les figures 1 à 3 sont des vues latérale, de dessus et frontale d'une stalle faisant partie d'un mode de réalisation d'une installation de traite automatique selon l'invention,
- les figures 4 à 6 sont des vues d'un bras manipulateur latéral équipant la stalle des figures 1 à 3,
- les figures 7 et 8 sont des vues d'un bras manipulateur inférieur équipant la stalle des figures 1 à 3,
- la figure 9 est un schéma d'un capteur de position faisant partie de l'installation des figures 1 à 3, et
- les figures 10 et 11 sont des vues, d'une part, en élévation et partiellement en coupe et, d'autre part, de dessus, d'un gobelet trayeur et d'un détecteur associé fixés à l'extrémité de chaque bras équipant la stalle des figures 1 à 3.

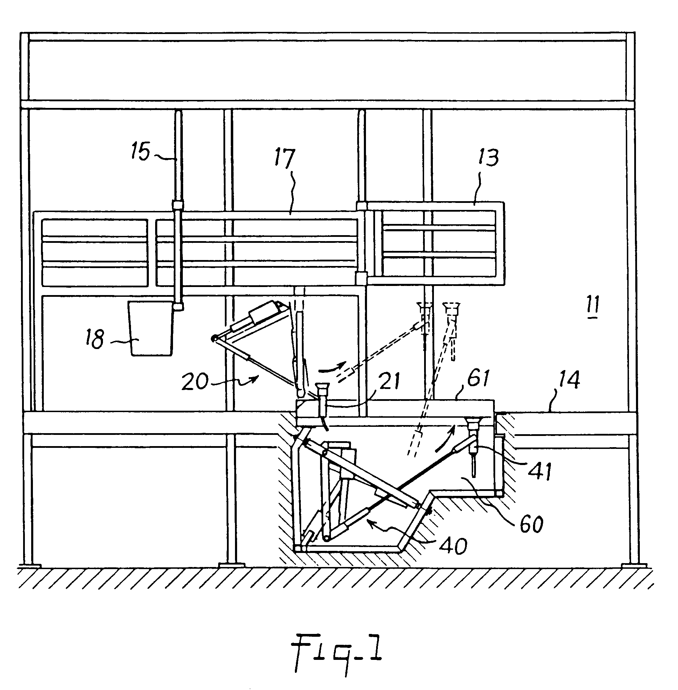

Sur les figures 1 à 3, la référence 10 désigne d'une façon générale une stalle d'une installation de traite selon l'invention, cette installation comprenant bien entendu une pluralité de stalles identiques. Les stalles peuvent être disposées à l'intérieur d'un même bâtiment ou être munies chacune de leur propre abri. Les animaux accèdent librement aux stalles quand ils le désirent et autant de fois qu'ils le désirent. Il n'est pas nécessaire d'ordonner les emplacements des stalles comme c'est le cas dans les stalles de traite classiques. De plus, les traites des animaux, même si elles sont plus fréquentes que traditionnellement, sont réparties sur l'ensemble de la journée. Aussi, pour un même élevage, le nombre de stalles peut être notablement réduit, par exemple en ne prévoyant qu'une stalle pour trente vaches au lieu d'une pour huit comme c'est généralement le cas dans une salle de traite classique.

La stalle 10 est accessible à l'arrière par un passage 11 pour un animal, ce passage étant muni, comme connu en soi dans les installations de stabulation libre, de moyens (non représentés) pour identifier l'animal entrant grâce à une plaque d'identification portée par celui-ci. L'entrée proprement dite de la stalle 10 est équipée d'une porte formée par deux barrières 12, 13 mobiles autour d'axes verticaux de chaque côté de la stalle.

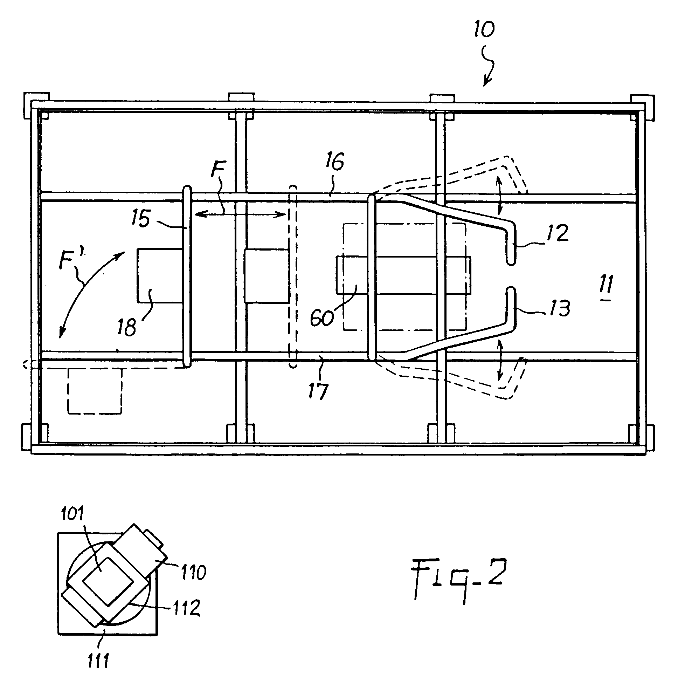

A l'avant, la stalle est fermée par une barrière 15 qui peut coulisser horizontalement (comme indiqué par F sur la figure 2) le long des côtés 16, 17 de la stalle sous l'action de vérins (non représentés). La barrière 15 est par ailleurs montée pivotante autour d'un axe vertical situé sur un côté de la stalle (comme indiqué par F sur la figure 2) afin de permettre la sortie de l'animal par l'avant. On notera aussi que la barrière 15 est munie d'une mangeoire 18 qui peut être alimentée de façon connue en soi au moyen d'un système de distribution automatique d'aliments commandé par une unité centrale à microprocesseur.

Le coulissement de la barrière 15 permet de régler la longueur de la stalle en fonction de l'animal identifié, de manière que les trayons de tout animal ayant pénétré dans la stalle se trouvent toujours dans une même zone A (en traits mixtes sur la figure 2) quelle que soit la taille de l'animal. L'accès d'un animal se déroule donc comme suit : l'animal arrivant dans le passage est identifié et les vérins faisant coulisser la barrière avant 15 sont actionnés pour adapter la longueur de la stalle à l'animal. Les barrières arrière 12, 13 sont ouvertes (position indiquée en tirets sur la figure 2) et, lorsque l'animal est entré dans la stalle, ce qui peut être détecté par un capteur de type optique à l'avant de la stalle, les barrières 12, 13 sont refermées. Grâce à leur forme coudée (figure 2), les barrières enserrent la partie postérieure de l'animal latéralement et à l'arrière, contribuant ainsi à maintenir cette partie postérieure immobile, et à conserver aux trayons d'un même animal sensiblement les mêmes positions d'une traite à l'autre.

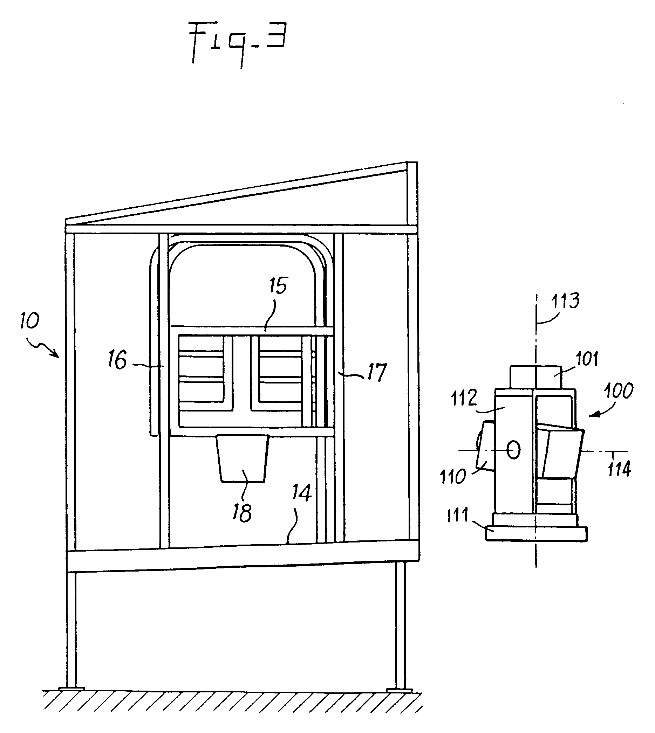

La stalle 10 est équipée de quatre bras manipulateurs (non représentés sur les figures 2 et 3) destinés à permettre la mise en place automatique de gobelets trayeurs sur les trayons d'un animal en place dans la stalle. Chaque bras porte à son extrémité un gobelet trayeur respectif qui est relié par une conduite à une machine de traite (non représentée) qui peut être de tout type connu. Dans l'exemple illustré, les bras manipulateurs sont répartis en deux bras manipulateurs latéraux et deux bras manipulateurs inférieurs.

Les deux bras manipulateurs latéraux 20 (dont un seul est représenté sur la figure 1) sont disposés un de chaque côté de la stalle et portent un gobelet trayeur 21 à leur extrémité. En position d'origine, chaque bras 20 occupe une position en retrait située sur le côté de la stalle. En position de travail (représentée en tirets sur la figure 1), chaque bras 20 amène le gobelet trayeur 21 qu'il porte sur le trayon avant de l'animal le plus proche du côté de la stalle où se trouve le bras.

Les deux autres bras manipulateurs 40 (dont un seul est visible sur la figure 1) sont disposés côte à côte à la partie inférieure de la stalle et portent un gobelet trayeur 41 à leur extrémité. Au repos, chaque bras 40 occupe une position repliée à l'intérieur d'un logement 60 situé sous le plancher 14 de la stalle 10, dans la partie médiane de celle-ci et sensiblement à l'aplomb de la zone A. En position de travail (en tirets sur la figure 1), chaque bras 40 amène le gobelet trayeur 41 qu'il porte sur le plus proche trayon arrière de l'animal en place dans la stalle.

Comme le montre la figure 1, le logement 60 est formé dans une partie médiane surélevée du plancher 14, cette surélévation obligeant l'animal à maintenir les pieds arrière suffisamment écartés l'un de l'autre, mais sans que cela constitue une gêne pour l'animal. Le logement 60 est fermé par une porte 61 qui coulisse dans la direction longitudinale de la stalle 10 sous l'action d'un vérin. A l'intérieur du logement 60 et à côté des bras 40 peuvent être prévus des injecteurs (non représentés) pour projeter sur les trayons de l'animal un liquide de nettoyage avant la traite et un produit désinfectant après la traite. L'ouverture de la porte 61 est commandée automatiquement après fermeture des barrières 12, 13, et la fermeture de la porte 61 est commandée après la dépose des gobelets trayeurs et, éventuellement, la projection de produit désinfectant.

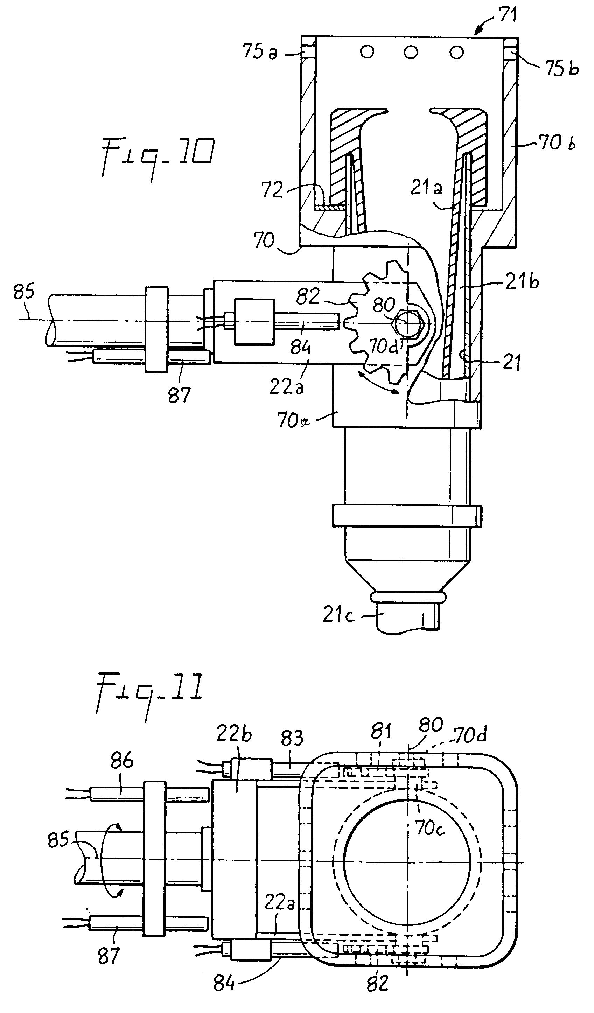

Un capteur 100 (non représenté sur la figure 1) est disposé en un emplacement fixe d'un côté de la stalle, à l'extérieur du couloir emprunté par les animaux. Il comprend un dispositif de balayage optique 101 et une caméra 110 pour fournir des informations représentatives de l'image des trayons d'un animal parvenu dans la stalle et un dispositif de traitement d'informations 120 pour calculer les coordonnées des trayons afin de commander les bras manipulateurs. Une description détaillée du capteur 100 est donnée plus loin en référence à la figure 9.

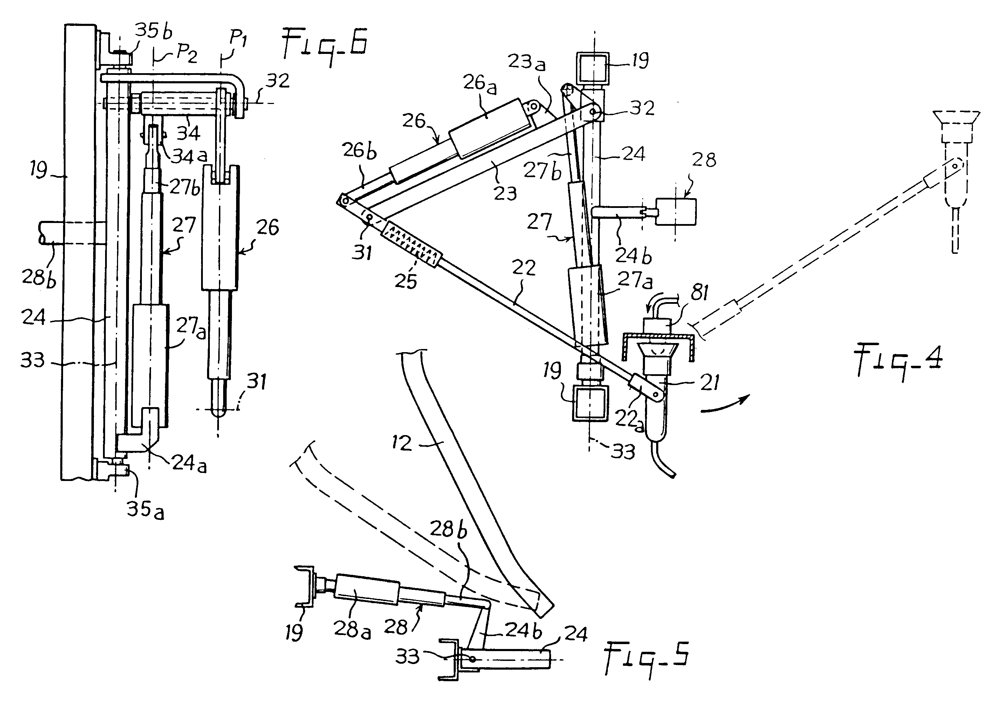

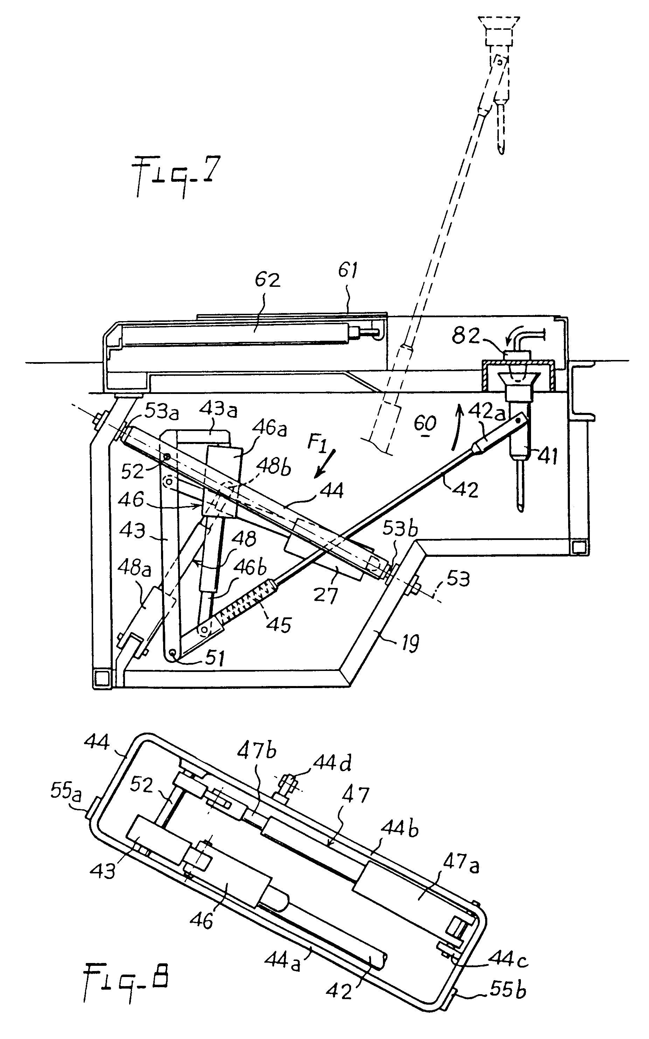

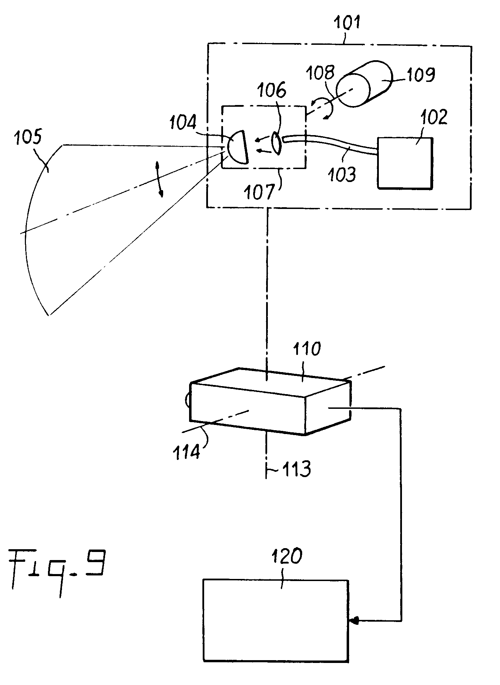

On se réfèrera maintenant aux figures 4 à 6 qui illustrent plus en détail la structure d'un bras manipulateur latéral vu, respectivement, de côté, en partie de dessus et en partie de face.

Le bras 20 comprend essentiellement trois tronçons ou tiges 22, 23, 24 articulés entre eux.

La tige terminale 22 porte le gobelet trayeur 21 à une première extrémité. Le gobelet 21 est porté par un support 70 lui-même monté libre en rotation à l'extrémité 22a en forme de chape de la tige 22, la chape 22a pouvant elle-même tourner librement autour de l'axe longitudinal de la tige 22. Pendant le mouvement du bras, le support 70 et le gobelet 21 conservent normalement, par gravité, une position verticale avec l'ouverture du gobelet dirigée vers le haut. Grâce à son montage à l'extrémité de la tige 22, le support 70 peut s'orienter librement lors de la mise en place du gobelet 21 sur le trayon. Un mode de réalisation du montage du gobelet 21 dans le support 70 est décrit plus loin en détail en référence aux figures 10 et 11.

Au voisinage de sa deuxième extrémité, la tige 22 est reliée par un ressort 25 à une première extrémité de la tige 23 de manière à pouvoir pivoter par rapport à celle-ci autour d'un axe horizontal 31. Le ressort 25 a pour fonction d'éviter par sa déformation un endommagement du bras manipulateur si l'animal vient à donner un coup de pied à la tige 22 ou au gobelet trayeur 21. Le ressort 25 est toutefois choisi avec une raideur telle que le gobelet 21 ne soit sujet à aucune oscillation notable lors du mouvement normal du bras manipulateur. Le pivotement de la tige 22 par rapport à la tige 23 est réalisé au moyen d'un vérin 26. Celui-ci a son cylindre 26a fixé à la tige 23 par une patte 23a, tandis que la tige 26b du vérin 26 est à son extrémité reliée à la deuxième extrémité de la tige 22 par une articulation à rotule.

A sa deuxième extrémité, la tige 23 est montée pivotante autour d'un axe 32 parallèle à l'axe 31. Comme on le voit sur la figure 6, cette deuxième extrémité de la tige 23 est fixée à une extrémité d'un manchon tubulaire 34 qui est monté libre en rotation sur l'axe 32. A l'autre extrémité du manchon 34 est fixée une chape 34a à laquelle l'extrémité de la tige 27b d'un vérin 27 est reliée par une articulation à rotule. Le vérin 27 a son cylindre 27a fixé à la tige 24 au moyen d'une patte de fixation 24a soudée sur cette tige. Les axes des vérins 26 et 27 sont situés dans deux plans verticaux P1, P2 décalés l'un par rapport à l'autre (figure 6).

La tige 24 est montée à ses extrémités dans des paliers 35a, 35b d'axe vertical 33 qui sont fixés à un bâti 19. La rotation de la tige 24 sur elle-même autour de l'axe 33 est effectuée au moyen d'un troisième vérin 28 dont le cylindre 28a fixé au bâti 19 et dont la tige 28b est articulée à son extrémité sur une patte 24b solidaire de la tige 24.

Les vérins 26, 27, 28 sont par exemple des vérins à vis actionnés par des moteurs électriques. Le passage du bras 20 en position de travail est commandé en fournissant aux moteurs des vérins des signaux fonction des coordonnées de la position de consigne du gobelet trayeur 21 porté par le bras 20. Comme on le verra plus loin, les coordonnées de la position de consigne sont élaborées à partir de signaux d'un capteur de position. Les axes 31, 32, 33 offrent les degrés de liberté nécessaires pour amener le gobelet trayeur dans la position voulue. La rotation autour de l'axe vertical 33 déplace le gobelet vers l'intérieur de la stalle. On notera que l'axe 33 est parallèle et voisin de l'axe de rotation de la barrière située du même côté (sur la figure 5, la barrière 12 est illustrée partiellement). Les pivotements autour des axes 31 et 32 permettent d'ajuster la longueur du bras 20 et la hauteur du gobelet trayeur 21 qu'il porte. Une position de travail du bras 20 est illustrée en tirets sur la figure 4.

Un mode de réalisation d'un bras manipulateur inférieur 40 sera maintenant décrit en référence aux figures 7 et 8 qui illustrent le bras respectivement vu de côté dans le logement 60, et en partie vu suivant la flèche F1 de la figure 7.

Comme les bras 20, chaque bras 40 comprend essentiellement trois tronçons 42, 43, 44 articulés entre eux.

Le tronçon terminal est une tige 42 qui porte le gobelet trayeur 41 à une première extrémité. Le gobelet 41 est porté par un support 80 lui-même monté libre en rotation à l'extrémité 42a en forme de chape de la tige 42, la chape 42a pouvant elle-même tourner librement autour de l'axe longitudinal de la tige 42. Ainsi, pendant le mouvement du bras, le support 80 et le gobelet 41 restent sensiblement verticaux sous l'action de la gravité et le gobelet 41 présente en permanence son ouverture vers le haut. Grâce à son montage à l'extrémité de la tige 42, le support 80 peut s'orienter librement lors de la mise en place du gobelet 41 sur le trayon.

A sa deuxième extrémité, la tige 42 est reliée par un ressort 45 à une première extrémité du tronçon ou tige 43 de manière à pouvoir pivoter autour de celle-ci autour d'un axe 51 sensiblement horizontal et perpendiculaire à la direction longitudinale de la stalle. Le ressort 45 est identique dans sa structure et sa fonction au ressort 25 qui équipe chaque bras 20. Le pivotement de la tige 42 par rapport à la tige 43 est réalisé au moyen d'un vérin 46 dont le cylindre 46a est fixé à la tige 43 par une patte 43a et dont la tige 46b est articulée à son extrémité sur la tige 42 au voisinage de son raccordement avec la tige 43.

A sa deuxième extrémité, la tige 43 est montée pivotante par rapport au tronçon 44 autour d'un axe 52 parallèle à l'axe 51. Comme le montre la figure 8, la deuxième extrémité de la tige 43 est fixée à une extrémité d'une tige matérialisant l'axe 52. L'axe 52 est monté libre en rotation entre deux barres 44a, 44b et est solidaire, au voisinage de son autre extrémité, d'une pièce de raccordement 52a sur laquelle est montée pivotante l'extrémité de la tige 47b d'un vérin 47. Les barres 44a, 44b sont reliées à leurs extrémités pour former un cadre allongé qui constitue le troisième tronçon 44 du bras manipulateur 40. Le cylindre 47a du vérin 47 est fixé au cadre 44 par l'intermédiaire d'une pièce d'attache 44c.

Le cadre 44 est monté pivotant par l'intermédiaire d'axes 53a, 53b qui sont portés par le bâti 19 et pénètrent dans des paliers 55a, 55b formés aux extrémités du cadre 44. Les axes 53a, 53b définissent un axe de rotation 53 qui est incliné par rapport à l'horizontale et perpendiculaire aux axes 51 et 52. La rotation du cadre 44 autour de l'axe 53 est réalisée au moyen d'un vérin 48 dont la tige 48b est articulée à son extrémité sur une patte 44d portée par la barre 44b et dont le cylindre 48a est fixé au bâti 19.

Les vérins 46, 47, 48 sont par exemple également des vérins à vis actionnés par des moteurs électriques. Le passage du bras 40 en position de travail est commandé en fournissant aux moteurs des vérins des signaux fonction des coordonnées de la position de consigne du gobelet trayeur 41 porté par le bras 40. Les axes 51, 52, 53 offrent les degrés de liberté nécessaires pour amener le gobelet trayeur 41 dans la position souhaitée. La rotation autour de l'axe 53 permet d'ajuster la position transversale du gobelet trayeur 41 tandis que la longueur du bras 40 et la hauteur du gobelet 41 sont essentiellement ajustées par les pivotements autour des axes 51, 52.

Sur la figure 7, on a représenté les éléments du bâti 19 qui délimitent le logement 60, ainsi que la porte 61 et le vérin 62 manoeuvrant celle-ci. Sur cette même figure, une position de travail du bras 40 est représentée en tirets.

De ce qui précède, on retiendra que chaque bras manipulateur n'a que trois axes commandés avec deux rotations libres à l'attache du support de gobelet. Cette relative simplicité de structure des bras manipulateurs permet d'allier fiabilité et robustesse à un coût raisonnable. De plus, et comme déjà souligné, les quatre bras permettront la mise en place simultanée des gobelets trayeurs sans risque d'interférence entre leurs trajectoires. A la sécurité apportée par le montage des tiges terminales des bras sur des ressorts, on peut ajouter des systèmes de détection de proximité, par exemple fonctionnant par ultrasons. De tels systèmes montés sur les bras manipulateurs peuvent permettre d'éviter les chocs en commandant l'escamotage du bras lorsqu' est détectée l'arrivée d'un corps animé d'une certaine vitesse, par exemple un pied de vache ou un bras voisin oscillant sous l'effet d'un coup de pied de vache.

Bien que l'on ait envisagé la répartition des bras entre deux bras inférieurs et deux bras latéraux, d'autres dispositions sont envisageables. Ainsi, à la place des deux bras latéraux, on peut prévoir deux bras inférieurs supplémentaires ayant, comme le bras 40, des positions d'origine situées sous le plancher de la stalle.

Dans le mode de réalisation décrit, la mise en place des gobelets trayeurs est réalisée par combinaison entre un positionnement approché et un positionnement final des bras manipulateurs.

Le positionnement approché est effectué en commandant les quatre bras manipulateurs à partir d'informations fournies par le capteur global 100 et représentatives des coordonnées des trayons de l'animal dans la stalle. Un mode de réalisation d'un capteur global est illustré schématiquement par la figure 9.

Le dispositif de balayage optique 101 comprend une source laser 102. Le faisceau de lumière produit par la source est acheminé par une fibre optique 103 jusqu'à une lentille cylindrique 104 pour former un plan lumineux 105. Le faisceau incident sur la lentille cylindrique est focalisé au moyen d'un dispositif optique approprié tel qu'une lentille 106 située à l'extrémité de la fibre optique.

L'extrémité de la fibre 103 portant les lentilles 104 et 106 est montée dans un support 107 qui peut pivoter autour d'un axe horizontal 108 sous la commande d'un moteur pas à pas 109. Un balayage vertical par le plan lumineux 105 est réalisé en commandant le pivotement de l'extrémité de la fibre optique 103, dans un sens et dans l'autre, au moyen du moteur 109. Le balayage est réalisé de manière à couvrir la zone dans laquelle se trouvent les trayons de tout animal en place dans la stalle.

La caméra 110 est monté sur le même socle 111 que celui supportant le dispositif de balayage 101, mais à distance de celui-ci. Le socle 111 est placé d'un côté de la stalle, sur le plancher de celle-ci, ou au même niveau que le plancher. Dans l'exemple illustré (voir figure 3), la caméra 110 est située à un niveau inférieur à celui du dispositif de balayage, au-dessous de ce dernier. A titre d'exemple, on pourra utiliser une caméra formée d'éléments CCD (dispositifs à couplage de charge).

La caméra 110 est fixée sur un support 112 monté sur le socle 111 de manière à permettre une orientation de la caméra autour d'un axe vertical 113 par rotation du support 112 par rapport au socle 111 et autour d'un axe horizontal 114 par rotation de la caméra par rapport au support 112. De la sorte, après son installation, la caméra 110 peut être orientée de manière à viser une zone de travail dans laquelle se trouvent les trayons de tout animal dans la stalle.

L'image formée sur la caméra 110 des lignes produites sur la mamelle et les trayons par le balayage par le plan lumineux 105 est numérisée et analysée au moyen du dispositif de traitement 120 pour identifier les lignes discontinues produites par le balayage des trayons afin de reconnaître la position de ceux-ci. Lorsque la position d'un trayon dans l'image formée sur la caméra 110 est identifiée, les coordonnées de ce trayon peuvent être calculées au moyen du dispositif de traitement 120 par simple triangulation, connaissant les positions respectives du dispositif de balayage et de la caméra et leurs orientations. Les coordonnées sont mesurées suivant deux axes horizontaux et un axe vertical mutuellement perpendiculaires, par rapport à une origine fixe quelconque.

Avantageusement, le dispositif de traitement d'informations 120 comprend une mémoire dans laquelle sont enregistrées des informations de référence représentatrices des coordonnées présumées des trayons de chacun des animaux susceptibles de pénétrer dans la stalle. De la sorte, lorsqu'un animal a pénétré dans la stalle et a été identifié, les coordonnées de référence relatives à cet animal peuvent être lues dans la mémoire 120, ce qui permet de connaître l'emplacement approximatif où doivent normalement se trouver les trayons. Pour tenir compte de l'évolution de la morphologie de l'animal, les informations de référence sont avantageusement remises à jour quotidiennement en remplaçant les informations mémorisées par celles correspondant aux coordonnées des gobelets trayeurs après le positionnement final décrit plus loin.

La connaissance des coordonnées de référence peut être utilisée pour limiter l'analyse de l'image à la partie de celle-ci où doivent normalement se trouver les trayons, d'où une diminution du temps de calcul des coordonnées. Les coordonnées de référence permettent également une validation des coordonnées calculées pour ne prendre effectivement en compte les coordonnées calculées que si les écarts entre celles-ci et les coordonnées de référence restent dans des limites prédéterminées.

Les coordonnées de chacun des trayons identifiés sur l'image sont calculées, ce qui inclut nécessairement les coordonnées du trayon le plus proche de la caméra. Si les coordonnées de deux ou trois trayons seulement peuvent être calculées, en dépit d'un positionnement du capteur 100 de manière à "voir" normalement les quatre trayons, les coordonnées du ou des trayons restants sont évalués à partir des coordonnées de référence mémorisées.

Lorsque toutes les coordonnées des trayons sont calculées, les bras manipulateurs sont commandés pour amener les gobelets trayeurs sur les trayons. Les bras manipulateurs peuvent être commandés simultanément ou séquentiellement, la mesure de coordonnées étant poursuivie pendant le déplacement des bras. Lorsque les gobelets trayeurs sont mis en place l'un après l'autre, on procèdera de préférence en commençant par celui à mettre en place sur le trayon le plus éloigné et en finissant par le plus proche de manière à continuer la mesure de coordonnée sur ce dernier le plus longtemps possible.

Le positionnement des gobelets trayeurs à partir des coordonnées calculées est poursuivi jusqu'à ce que les trayons parviennent dans le champ d'action de détecteurs associés aux différents gobelets et destinés à permettre le positionnement final de ceux-ci, les bras étant alors toujours commandés par le dispositif de traitement 120, mais à partir des signaux des détecteurs.

Le dispositif de traitement 120 comprend de façon classique une unité centrale à microprocesseur mettant en oeuvre des programmes stockés dans une mémoire associée pour analyser l'image de la caméra et commander les vérins des bras manipulateurs. Les positions des trayons dans l'image sont déterminées par tout processus connu d'analyse d'image ou de reconnaissance de formes ou de contours. Par ailleurs, les signaux de commande des bras manipulateurs sont élaborés à partir des coordonnées de consigne calculées comme pour tout système robotisé.

Les détecteurs associés aux différents gobelets 21, 41 sont portés par les supports 70, 80. Ces détecteurs étant identiques, on décrira ci-après en référence aux figures 10 et 11 l'un des détecteurs 71 associés aux gobelets 21.

Comme on le voit sur la figure 10, le gobelet 21, par exemple en acier inoxydable supporte un manchon trayeur 21a en caoutchouc en définissant avec lui un espace annulaire 21b. Le manchon 21a est ouvert à son extrémité supérieure et est relié à une machine de traite (non représentée) par une conduite 21c. De façon classique, la machine de traite comprend une source de vide pour permettre pendant la traite, d'établir une dépression permanente dans la conduite 21c, et d'alterner dans l'espace annulaire 21b l'établissement d'une dépression et le retour à la pression atmosphérique.

Le gobelet 21 est monté dans le support tubulaire 70 de manière à pouvoir se mouvoir verticalement par rapport à celui-ci. Tel qu'illustré sur la figure 10, le gobelet repose par sa partie supérieure sur un décrochement formé par la paroi interne du support 70. Des tétons 70c sont formés sur la partie inférieure 70a à section circulaire du support 70, pour permettre le montage de la chape 22a au moyen de vis d'arrêt 70d. Ainsi, le gobelet 21 est supporté par le bras 20 par l'intermédiaire du support 70.

A sa partie supérieure 70b, le support 70 a une section sensiblement carrée (figure 11) et porte le détecteur 71 formé par un ensemble d'émetteurs-récepteurs optiques fonctionnant par exemple dans l'infrarouge.

Un interrupteur à lame souple 72 est interposé entre le support 70 et le gobelet trayeur 21, l'ouverture de l'interrupteur provoquant l'arrêt du mouvement du bras 20. En variante, l'interrupteur 72 est un interrupteur à lame logé dans une ampoule sous vide qui est noyée dans le support 70, par exemple à la base de la partie supérieure 70b, et qui coopère avec un aimant porté par le manchon trayeur 21a.

Le détecteur 71 comprend plusieurs émetteurs 75a disposés sur un premier côté de la partie supérieure 70b du support 70 et coopèrant avec des récepteurs respectifs 75b disposés sur le côté opposé (figure 10). De la même façon, plusieurs émetteurs 76a sont disposés sur un côté adjacent au premier et coopèrent avec des récepteurs respectifs 76b disposés sur le côté opposé. Les couples émetteur-récepteur 75a-75b et 76a-76b définissent de façon classique un quadrillage à travers l'ouverture supérieure du support 70 pour fournir une information de la position du trayon par rapport au centre de cette ouverture. Les émetteurs 75a, 76a sont par exemple des diodes électroluminescentes émettant dans l'infrarouge tandis que les récepteurs 75b, 76b sont des convertisseurs opto-électriques tels que, par exemple des photo-transistors.

Les émetteurs 75a, 76a et les récepteurs 75b, 76b sont reliés par des conducteurs à un circuit implanté sur une carte montée avantageusement sur le support 70, par exemple à la base de la partie supérieure 70b. Le montage de cette carte sur le détecteur permet d'effecteur localement de traitements de signaux pour limiter le nombre de liaisons avec le dispositif de traitement central. Les conducteurs et la carte sont noyés dans un isolant.

Les informations de position du trayon dérivées des signaux des récepteurs permettent de commander le bras lors du positionnement final afin de maintenir le trayon sensiblement au centre de l'ouverture du support 70. Pendant le positionnement final, le bras est notamment déplacé vers le haut pour engager le trayon dans le manchon trayeur 21a. Lorsque le support est parvenu dans une position telle que le manchon trayeur 21a se plaque sur le trayon sous l'effet du vide, le manchon décolle verticalement du support 70, ce qui provoque l'ouverture de l'interrupteur à lame souple 72 et l'arrêt du mouvement du bras manipulateur.

Dans l'exemple ci-dessus, le détecteur 71 utilise des émetteurs-récepteurs à infrarouges. D'autres systèmes de détection de position pourront bien entendu être utilisés, par exemple des capteurs de type tactile également montés sur les gobelets.

Lorsque le positionnement final des gobelets est terminé, la traite peut démarrer. Le fait que chaque gobelet soit mobile verticalement par rapport à son support autorise des mouvements verticaux des trayons pendant la traite sans exercer de traction sur les trayons par l'intermédiaire des bras fixes.

Avantageusement, des moyens sont prévus pour ajuster la position des bras en cours de traite de manière à maintenir les gobelets trayeurs en position sensiblement verticale malgré de possibles mouvements de l'animal dans la stalle.

A cet effet, des détecteurs sont disposés aux extrémités des bras pour détecter des mouvements des gobelets trayeurs, d'une part par rotation des gobelets dans les charges qui les portent, d'autre part par rotation des chapes autour des axes des tiges teminales des bras auxquelles elles sont fixées.

Comme le montrent les figures 10 et 11, des secteurs ou roues dentées 81, 82 solidaires du support 70 sont fixées sur les tétons 70c et coopèrent avec des capteurs de proximité 83, 84 fixés sur les branches de la chape 22a. Ainsi, la rotation du support 70 et du gobelet trayeur 21 dans la chape 22a, autour de l'axe 80 matérialisé par les tétons 70c est détectée par les capteurs 83, 84. Les roues dentées 81, 82 sont identiques mais légèrement décalées autour de l'axe 80 de manière à déterminer le sens de rotation du support 70.

De la même façon, des capteurs de proximité 86, 87 sont fixés sur la tige terminale 22, au voisinage de la chape 22a, pour détecter une rotation de la chape 22a et du support 70 autour de l'axe longitudinal 85 de la tige 22, ainsi que le sens de rotation. Comme le montrent les figures 10 et 11, les capteurs 86, 87 coopèrent avec les extrémités de la face arrière 22b de la chape 22a. Le montage des capteurs est réalisé de manière que, dans la position normale du support 70, les extrémités de la face 22b se trouvent à proximité des capteurs 86, 87, et qu'une rotation de la chape 22a autour de l'axe 85 éloigne la face 22b d'abord de l'un des capteurs, selon le sens de rotation, puis éventuellement de l'autre.

Les signaux des capteurs de proximité sont transmis au dispositif de traitement 120 pour commander, le cas échéant, un ajustement de la position des bras afin de ramener les gobelets trayeurs en position verticale.

Lorsque la fin de traite est détectée, par exemple par détection du débit de lait -comme connu en soi-, la dépose des gobelets trayeurs est commandée par retour des bras manipulateurs dans leurs positions d'origine qui sont des positions prédéterminées fixes.

Avantageusement, dans leurs positions d'origine, les bras manipulateurs amènent les gobelets trayeurs 21, 41 en regard d'injecteurs de liquide de nettoyage. Bien entendu, au voisinage de la position d'origine, la trajectoire de chaque bras est déterminée pour permettre l'engagement du gobelet trayeur sous l'injecteur de nettoyage, ou son dégagement de l'injecteur de nettoyage. Les injecteurs sont représentés schématiquement en 81 et 82 sur les figures 4 et 7 uniquement. Le nettoyage du circuit de lait de la machine à traire est alors réalisé par injection de liquide par les gobelets.

Le nettoyage peut être effectué après chaque traite. Toutefois, lorsque plusieurs traites sont réalisées successivement à intervalles de temps très rapprochés, un nettoyage systématique après chaque traite n'est pas nécessaire, voire même pas souhaitable en raison du risque de mouillage du lait par du liquide subsistant dans le circuit de lait. Ainsi, on pourra prévoir une temporisation pour ne déclencher un cycle de nettoyage après une traite que si un nouvel animal ne s'est pas présenté dans un intervalle de temps donné suivant la fin de cette traite. Bien entendu, pour éviter qu'un laps de temps trop important s'écoule entre deux nettoyages si de nombreux animaux se succèdent sans interruption, on commandera nécessairement le nettoyage après une traite si le temps écoulé depuis le précédent nettoyage dépasse une valeur prédéterminée.

L'installation de traite conforme à l'invention et dont un mode de réalisation vient d'être décrit est remarquable en ce qu'elle permet d'automatiser de façon économique et fiable une opération qui nécessitait encore une intervention manuelle. La mise en place et la dépose automatiques des gobelets trayeurs peut s'intégrer dans un système informatisé qui comprend aussi la distribution d'aliments, la mesure de production laitière, le prélèvement d'échantillons, la surveillance de fécondité, ..... permettant ainsi une totale automatisation de la production et une gestion informatisée de l'élevage complète.

**Revendications**

1. Installation de traite automatique comprenant :
   - un dispositif de traite mécanique avec des gobelets trayeurs (21,41) destinés à être mis en place sur les trayons d'animaux à traire,
   - un dispositif de mesure des coordonées des trayons d'un animal à traire comportant un capteur global (100) muni de moyens de balayage (101) permettant de former une image des trayons de l'animal, et des moyens de calcul des coordonnées instantanées des trayons à partir des informations fournies par le capteur, et
   - des moyens de mise en place automatique des gobelets trayeurs sur les trayons d'un animal, commandés en fonction des coordonnées calculées, et comportant quatre bras manipulateurs articulés indépendants (20,40), chacun portant un gobelet respectif à son extrémité et étant commandé indépendamment des autres pour déplacer le gobelet trayeur qu'il porte dans toute direction de l'espace, afin d'amener le gobelet trayeur sur un trayon respectif de l'animal sans interférer avec le mouvement des autres bras manipulateurs, installation caractérisée en ce qu'elle comprend en outre une stalle (10) accessible par un animal, et en ce que le capteur global est disposé en un emplacement fixe d'un côté de la stalle et comprend : une source laser (102) ; lesdits moyens de balayage étant agencés de manière à ce que le faisceau lumineux issu de la source balaie une zone de la stalle où se trouvent les trayons d'un animal à traire ayant pénétré dans la stalle ; et une caméra (110) pour former une image des trayons de cet animal, afin de déterminer les coordonnées des trayons par analyse de l'image formée sur la caméra.

2. Installation selon la revendication 1, caractérisée en ce que des moyens de détection particuliers (71) sont associés à chaque gobelet trayeur et sont destinés à fournir une information de position représentative de la position relative entre un gobelet trayeur et un trayon d'un animal ayant pénétré dans la stalle, lorsque la gobelet trayeur a été amené à proximité du trayon, pour commander le bras manipulateur correspondant afin d'effectuer le positionnement final du gobelet trayeur sur le trayon.

3. Installation selon l'une quelconque des revendications 1 et 2, caractérisée en ce que chaque bras manipulateur (20,40) est muni de moyens (81-84,86-87) pour détecter des mouvements relatifs entre le bras et le gobelet trayeur qu'il porte, afin d'ajuster, le cas échéant, la position du bras pendant la traite d'un animal, pour compenser un déplacement relatif entre le bras et le gobelet trayeur porté par le bras, provoqué par un mouvement de l'animal.

4. Installation selon l'une quelconque des revendications 1 à 3, caractérisée en ce que chaque bras manipulateur (20,40) comprend, à son extrémité, une tige (22,42) portant le gobelet trayeur correspondant (21,41) et reliée au reste du bras par un dispositif (25,45) déformable élastiquement pour pouvoir supporter sans dommage des coups portés par les animaux.

5. Installation selon l'une quelconque des revendications 1 à 4, caractérisée en ce qu'elle comprend au moins deux bras manipulateurs inférieurs (40) mobiles entre des positions d'origine situées sous le plancher de la stalle et des positions de travail dans lesquelles ils amènent les gobelets trayeurs (41) qu'ils portent sur deux trayons respectifs d'un animal.

6. Installation selon l'une quelconque des revendications 1 à 5, caractérisée en ce qu'elle comprend au moins deux bras manipulateurs latéraux (20) mobiles entre des positions d'origine situées chacune d'un côté respectif de la stalle et des positions de travail dans lesquelles ils amènent les gobelets trayeurs (21) qu'ils portent sur deux trayons respectifs d'un animal.

7. Installation selon la revendication 5, caractérisée en ce que les bras manipulateurs inférieurs (40) sont, en position d'origine, situés dans un logement (60) qui est formé dans une partie médiane surélevée du plancher de la stalle et qui est obturé par une porte amovible (61).

8. Installation selon la revendication 7, caractérisée en ce que des moyens de nettoyage des trayons des animaux à traire sont disposés dans ledit logement.

9. Installation selon l'une quelconque des revendications 1 à 8, caractérisée en ce qu'elle comprend un dispositif de réglage de la position d'une barrière avant (15) de la stalle (10) qui agit en réponse à des moyens d'identification d'un animal accédant à la stalle afin de régler la position de la barrière avant pour que les trayons de différents animaux à traire se trouvent toujours sensiblement dans une même zone de la stalle.

10. Installation selon l'une quelconque des revendications 1 à 9, caractérisée en ce que le dispositif de mesure de coordonnées comprend une mémoire dans laquelle sont enregistrées des informations représentant les coordonnées présumées des trayons de chaque animal à traire, et en ce que sont prévus des moyens d'identification d'un animal pénétrant dans la stalle, pour commander la lecture dans la mémoire des coordonnées présumées des trayons de l'animal identifié.

11. Installation selon l'une quelconque des revendications 1 à 10, caractérisée en ce que le gobelet (21,41) est monté mobile verticalement dans un support (70,80) porté par le bras manipulateur correspondant, et des moyens interrupteurs (72) sont disposés entre le gobelet trayeur et le support pour commander l'arrêt du mouvement du bras manipulateur en réponse au décollement du gobelet trayeur par rapport au support.

12. Installation selon l'une quelconque des revendications 1 à 11, caractérisée en ce que les bras manipulateurs (20,40) sont mobiles entre des positions de travail, dans lesquelles ils amènent les gobelets qu'ils portent sur des trayons respectifs d'un animal à traire, et des positions d'origine dans lesquelles ils amènent les gobelets qu'ils portent en regard d'injecteurs (81,82) de produit de nettoyage.

**Claims**

1. Automatic milking installation comprising
   - a mechanical milking device with milking cups (21,41) designed to be positioned on the teats of animals to be milked,
   - a device for measuring the coordinates of the tests of an animal to be milked, comprising an overall sensor (100) equipped with scanning means (101) permitting the formation of an image of the animal's tests and means for calculating the instant coordinates of the tests from information supplied by the sensor, and
   - means for automatically positioning the milking cups on the tests of an animal, which means are controlled as a function of the calculated coordinates, and comprise four independent articulated control arms (20, 49) each one carrying a respective cup on its end and being controlled independently of the others for moving the milking cup that it carries in any direction in space, in order to bring the milking cup to a respective teat of the animal without interfering with the movement of the other control arms, installation characterized in that it further comprises a stall (10) accessible to an animal, and in that the overall sensor is located in a fixed spot on one side of the stall and comprises: a laser source (102); said scanning means being arranged so that the light beam issued from the source scans one zone of the stall where are situated the teats of an animal which has entered into the stall; and a camera (110) for forming an image of said animal's teats in order to determine the coordinates of the teats by analysis of the image formed on the camera.

2. Installation according to claim 1, characterized in that special detection means (71) are coupled to each milking cup and are designed to supply a position information representing the relative position between a milking cup and the teat of an animal standing in the stall, when the milking cup has been brought near the test, for controlling the corresponding control arm in order to achieve the final positioning of the milking cup on the test.

3. Installation according to any one of claims 1 and 2, characterized in that each control arm (20,40) is equipped with means (81-84,86-87) for detecting relative movements during milking of an animal between the arm and the milking cup that it carries, in order to eventually adjust the position of the arm, to compensate a relative displacement between the arm and the milking cup carried by said arm, caused by movement of the animal.

4. Installation according to any one of claims 1 to 3, characterized in that each control am (20,40) comprises, at its end, a rod (22,42) carrying the corresponding milk cup (21,41) and connected to the remaining part of the arm by means of an elastically deformable device (25,45) capable of withstanding a kick from the animal without being damaged.

5. Installation according to any one of claims 1 to 4, characterized in that it comprises at least two lower control arms (40) movable between original positions situated under the stall floor and working positions in which they bring the milking cups (41) that they carry onto two respective tests of an animal.

6. Installation according to any one of claims 1 to 5, characterized in that it comprises at least two lateral control arms (20) movable between original positions each one situated on a respective side of the stall and working positions in which they bring the milking cups (21) that they carry onto two respective teats of an animal.

7. Installation according to claim 5, characterized in that the lower control arms (40) are, in their original position, located inside a housing (60) which is formed in a raised middle part of the stall floor and which is closed off by a removable gate (61).

8. Installation according to claim 7, characterized in that means for cleaning the tests of the animals to be milked are provided in said housing.

9. Installation according to any one of claims 1 to 8, characterized in that it comprises a device for adjusting the position of a front gate (15) of the stall (10) which acts in response to means for identifying an animal reaching the stall in order to adjust the position of the front gate so that the teats of different animals to be milked are always substantially in the same zone of the stall.

10. Installation according to any one of claims 1 to 9, characterized in that the coordinates measuring device comprises a memory for storing information representing presumed coordinates relative to the teats of every animal to be milked, and in that means are provided for identifying an animal entering the stall, to allow reading in said memory of the presumed coordinates of the teats of an identified animal.

11. Installation according to any one of claims 1 to 10, characterized in that the cup (21,41) is mounted for moving vertically in a support (70,80) carried by the corresponding control arm, and switching means (72) are provided between the milking cup and the support in order to stop the movement of the control arm in response to the milking cup raising from said support.

12. Installation according to any one of claims 1 to 11, characterized in that the control arms (20,40) are movable between working positions, in which they bring the cups that they carry onto respective teats of an animal to be milked, and original positions in which they bring the milking cups that they carry opposite nozzles (81,82) spraying a cleaning liquid.

**Patentansprüche**

1. Automatische Melkeinrichtung, mit:
   - einer mechanischen Melkeinrichtung mit Zitzenbechern (21, 41), die dazu bestimmt sind, an den Zitzen der zu melkenden Tiere angeordnet zu werden,
   - einer Einrichtung zum Messen der Koordinaten der Zitzen eines zu melkenden Tieres, die einen globalen Meßwertaufnehmer (100), der mit Abtastmitteln (101) versehen ist, mit denen ein Bild der Zitzen des Tieres erzeugt werden kann, und Mittel zum Berechnen der momentanen Koordinaten der Zitzen anhand der vom Meßwertaufnehmer gelieferten Informationen umfaßt, und
   - Mitteln zum automatischen Anordnen der Zitzenbecher an den Zitzen eines Tieres, die in Abhängigkeit von den berechneten Koordinaten gesteuert werden und vier unabhängig voneinander schwenkbare Handhabungsarme (20, 40) aufweisen, von denen jeder an seinem Ende einen entsprechenden Becher trägt und unabhängig von den anderen gesteuert wird, um den von ihm getragenen Zitzenbecher in allen Raumrichtungen zu verschieben, damit der Zitzenbecher ohne Überlagerung mit der Bewegung der anderen Handhabungsarme an eine entsprechende Zitze des Tieres herangefuhrt werden kann, wobei die Melkeinrichtung dadurch gekennzeichnet ist, daß sie außerdem eine für ein Tier zugängliche Stallbucht (10) umfaßt und daß der globale Meßwertaufnehmer an einem festen Ort an einer Seite der Stallbucht angeordnet ist und umfaßt: eine Laserquelle (102), wobei die Abtastmittel so angeordnet sind, daß der von der Quelle ausgesandte Lichtstrahl eine Zone der Stallbucht abtastet, in der sich die Zitzen eines zu melkenden und in die Stallbucht eingedrungenen Tieres befinden; und eine Kamera (110), um ein Bild der Zitzen dieses Tieres zu erzeugen, damit mittels Analyse des von der Kamera erzeugten Bildes die Koordinaten der Zitzen bestimmt werden können.

2. Einrichtung gemäß Anspruch 1, dadurch gekennzeichnet, daß jedem Zitzenbecher spezielle Erfassungsmittel (71) zugeordnet sind, die dazu vorgesehen sind, eine die relative Position zwischen einem Zitzenbecher und einer Zitze eines in die Stallbucht eingedrungenen Tieres darstellende Positionsinformation zu liefern, wenn der Zitzenbecher in die Nähe der Zitze geführt worden ist, um den entsprechenden Handhabungsarm zu steuern, damit er die Endpositionierung des Zitzenbechers an der Zitze ausführt.

3. Einrichtung gemäß einem der Ansprüche 1 und 2, dadurch gekennzeichnet, daß jeder Handhabungsarm (20, 40) mit Mitteln (81-84, 86-87) versehen ist, um die Relativbewegungen zwischen dem Arm und dem von diesem getragenen Zitzenbecher zu erfassen, um gegebenenfalls die Position des Arms während des Melkvorgangs des Tieres einzustellen, um eine durch eine Bewegung des Tieres hervorgerufene relative Verschiebung zwischen dem Arm und dem vom Arm getragenen Zitzenbecher zu kompensieren.

4. Einrichtung gemäß einem der Ansprüche 1 bis 3, dadurch gekennzeichnet, daß jeder Handhabungsarm (20, 40) an seinem Ende einen Stift (22, 42) aufweist, der den entsprechenden Zitzenbecher (21, 41) trägt und bei unbewegtem Arm mit einer elastisch verformbaren Vorrichtung (25, 45) verbunden ist, um von den Tieren ausgeführte Schläge ohne Schaden zu überstehen.

5. Einrichtung gemäß einem der Ansprüche 1 bis 4, dadurch gekennzeichnet, daß sie wenigstens zwei untere Handhabungsarme (40) umfaßt, die zwischen Ausgangspositionen, die sich unter dem Boden der Stallbucht befinden, und Arbeitspositionen, in denen sie die von ihnen getragenen Zitzenbecher (41) an die zwei entsprechenden Zitzen eines Tieres führen, beweglich sind.

6. Einrichtung gemäß einem der Ansprüche 1 bis 5, dadurch gekennzeichnet, daß sie wenigstens zwei seitliche Handhabungsarme (20) umfaßt, die zwischen Ausgangspositionen, die sich jeweils auf einer Seite der Stallbucht befinden, und Arbeitspositionen, in denen sie die von ihnen getragenen Zitzenbecher (21) an die zwei entsprechenden Zitzen des Tieres führen, beweglich sind.

7. Einrichtung gemäß Anspruch 5, dadurch gekennzeichnet, daß sich die unteren Handhabungsarme (40) in der Ausgangsposition in einem Aufnahmeraum (60) befinden, der in einem mittleren Teil oberhalb des Bodens der Stallbucht ausgebildet ist und von einer aufmachbaren Türe (61) verschlossen ist.

8. Einrichtung gemäß Anspruch 7, dadurch gekennzeichnet, daß in diesem Aufnahmeraum Mittel zum Reinigen der Zitzen der zu melkenden Tiere angeordnet sind.

9. Einrichtung gemäß einem der Ansprüche 1 bis 8, dadurch gekennzeichnet, daß sie eine Einrichtung zum Einstellen der Position einer vorderen Begrenzungswand (15) der Stallbucht (10) aufweist, die auf Mittel zur Identifikation eines zur Stallbucht Zugang habenden Tieres anspricht, um die Position der vorderen Begrenzungswand einzustellen, damit sich die Zitzen der verschiedenen zu melkenden Tiere stets im wesentlichen in derselben Zone der Stallbucht befinden.

10. Einrichtung gemäß einem der Ansprüche 1 bis 9, dadurch gekennzeichnet, daß die Einrichtung zum Messen der Koordinaten einen Speicher umfaßt, in dem Informationen eingetragen sind, die die vermuteten Koordinaten der Zitzen eines jeden zu melkenden Tieres darstellen, und daß Mittel zur Identifikation eines in die Stallbucht eindringenden Tieres vorgesehen sind, um das Lesen der vermuteten Koordinaten der Zitzen des indentifizierten Tieres zu steuern.

11. Einrichtung gemäß einem der Ansprüche 1 bis 10 dadurch gekennzeichnet, daß der Becher (21, 41) in einer vom entsprechenden Handhabungsarm getragenen Halterung (70, 80) vertikal beweglich angebracht ist und zwischen dem Zitzenbecher und der Halterung Unterbrechermittel (72) angeordnet sind, um das Anhalten der Bewegung des Handhabungsarms aufgrund einer Ablösung des Zitzenbechers von der Halterung zu steuern.

12. Einrichtung gemäß einem der Ansprüche 1 bis 11, dadurch gekennzeichnet, daß die Handhabungsarme (20, 40) zwischen Arbeitspositionen, in denen sie die von ihnen getragenen Becher an die entsprechenden Zitzen eines zu melkenden Tieres heranführen, und Ausgangspositionen, in denen sie die von ihnen getragenen Becher an Positionen gegenüber Einspritzeinrichtungen (81, 82) für das Reinigungsmittel heranführen, beweglich sind.

Fig. 1

Fig-2

Fig-3

Fig-4

Fig-5

Fig-6

Fig-7

Fig-8

Fig.9

*Fig. 10*

*Fig. 11*